(19) Europäisches Patentamt / European Patent Office / Office européen des brevets

(11) **EP 3 341 678 B1**

(12) **FASCICULE DE BREVET EUROPEEN**

(45) Date de publication et mention de la délivrance du brevet:
**05.06.2019 Bulletin 2019/23**

(21) Numéro de dépôt: **16756705.6**

(22) Date de dépôt: **24.08.2016**

(51) Int Cl.:
*G01B 11/10* (2006.01)          *B23D 59/00* (2006.01)
*G01N 21/952* (2006.01)        *B23D 61/18* (2006.01)
*B28D 5/04* (2006.01)

(86) Numéro de dépôt international:
**PCT/EP2016/070010**

(87) Numéro de publication internationale:
**WO 2017/036888 (09.03.2017 Gazette 2017/10)**

(54) **PROCÉDÉ ET DISPOSITIF DE CONTRÔLE D'UN FIL DE DÉCOUPE À ABRASIFS LIÉS**

VERFAHREN UND VORRICHTUNG ZUR ÜBERWACHUNG EINES SCHNEIDDRAHTES MIT GEBUNDENEN SCHLEIFMITTELN

METHOD AND DEVICE FOR MONITORING A CUTTING WIRE WITH BONDED ABRASIVES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.08.2015 FR 1558029**

(43) Date de publication de la demande:
**04.07.2018 Bulletin 2018/27**

(73) Titulaire: **Commissariat à l'Énergie Atomique et aux Énergies Alternatives**
**75015 Paris (FR)**

(72) Inventeurs:
• **PENOT, Jean-Daniel**
**73000 Chambéry (FR)**
• **FAUJOUR, Alexandre**
**73870 Saint-Julien-Mont-Denis (FR)**
• **RIVA, Roland**
**73190 Challes-Les-Eaux (FR)**

(74) Mandataire: **Novaimo**
**ActiTech 8**
**60 avenue Marie Curie**
**Archamps Technopole**
**74166 Saint Julien-en-Genevois Cedex (FR)**

(56) Documents cités:
**EP-A1- 2 586 582          EP-A2- 2 827 132**
**CN-U- 203 965 287        JP-A- 2005 037 221**
**JP-A- 2014 108 472        US-B1- 6 242 755**

## Description

## Domaine technique de l'invention

L'invention concerne un procédé de contrôle d'un fil de découpe portant des grains abrasifs et d'un dispositif de contrôle correspondant.

## État de la technique

La découpe filaire est utilisée dans de nombreux domaines, notamment dans les domaines faisant usage de matériaux semi-conducteurs tels que la microélectronique, l'optoélectronique ou le photovoltaïque. Elle permet la mise en forme de matériaux durs, par exemple des matériaux semi-conducteurs, de la pierre, du marbre ou des céramiques. Généralement, la découpe filaire consiste à scier le matériau en blocs, en briques ou en fines tranches. Elle est notamment utilisée pour la fabrication des « wafers » ou plaquettes de matériau semi-conducteur (par exemple en silicium, germanium ou autre) à partir de lingots de semi-conducteur découpés en briques puis en tranches.

La découpe filaire requiert un élément abrasif destiné à créer des copeaux de matière par abrasion lors de la découpe. A cet effet, il est connu d'utiliser un fil de découpe à abrasifs liés, couramment appelé « fil diamanté ». Ce type de fil présente une surface extérieure comportant des aspérités qui sont formées par des grains abrasifs, généralement constitués par des diamants. Le fil est par exemple en acier. Les grains abrasifs sont solidaires du fil en mouvement. Ils peuvent être incrustés dans le fil. En variante, le fil comprend une âme, par exemple en acier, recouverte d'une couche de matériau liant dans laquelle les grains abrasifs sont partiellement enrobés de sorte à être maintenus solidaires du fil.

La découpe au fil diamanté, c'est-à-dire à abrasifs liés, constitue une technique particulièrement intéressante pour la découpe de matériaux semi-conducteurs tels que le silicium : elle offre une vitesse de coupe élevée et permet d'envisager de moindres pertes de matière, grâce à l'utilisation d'un fil fin. Actuellement, pour la découpe filaire du silicium, le diamètre du fil est de l'ordre de $100\,\mu m$, sachant que l'épaisseur des wafers est généralement de l'ordre de $180\,\mu m$.

Les performances de la découpe filaire sont intimement liées aux caractéristiques du fil.

D'une part, la quantité de copeaux générés lors de la découpe dépend de la quantité de grains abrasifs : augmenter la quantité de grains abrasifs permet d'augmenter le débit d'arrachement de matière. Par ailleurs, les interstices, formés par les volumes vides entre les grains abrasifs, jouent un rôle de réservoirs indispensables pour l'extraction des copeaux créés hors du sillon de coupe, les copeaux logés dans ces interstices étant charriés par un liquide de coupe sous l'action du mouvement du fil. Il en résulte que, pour optimiser la densité de grains abrasifs, il convient de trouver un compromis entre l'augmentation de la quantité de grains abrasifs et la préservation d'un nombre suffisant d'interstices.

D'autre part, la distribution des hauteurs de dépassement des grains abrasifs (c'est-à-dire des hauteurs de saillie ou de protubérance des grains à la surface du fil) est une caractéristique déterminante pour la qualité de la découpe. Si les hauteurs de dépassement présentent une dispersion trop importante, seule une partie réduite des grains abrasifs ont une action d'abrasion. Cela a pour effet de réduire la vitesse d'abrasion et de dégrader la qualité de la surface découpée.

La maîtrise de la morphologie du fil de découpe, notamment de la quantité et de la disposition des grains abrasifs sur le fil, est donc déterminante pour la qualité et le rendement de la découpe filaire.

Des méthodes connues pour contrôler la qualité d'un fil de découpe s'appuient sur l'utilisation d'un microscope optique, confocal ou électronique ou d'un profilomètre optique. Ces dispositifs ne permettent de réaliser qu'une analyse très locale du fil, sur des longueurs de quelques millimètres, voire quelques centimètres. La découpe filaire utilisant des longueurs de fil bien supérieures, de plusieurs centaines de mètres, voire plusieurs kilomètres pour une seule découpe, ces méthodes sont donc mal adaptées à la caractérisation et au contrôle de la qualité d'un fil de découpe.

On connaît également une méthode d'imagerie consistant à mettre en mouvement le fil devant une ou plusieurs caméras d'imagerie et à prendre des clichés ou images successifs du fil. Les images sont ensuite traitées par un outil de traitement d'image. Une telle solution est extrêmement lourde en temps de traitement et en ressources informatiques.

Le document EP2586582 décrit un procédé de contrôle d'un fil de découpe au diamant. Le procédé comprend les étapes suivantes :

- émission d'un faisceau lumineux ;
- entraînement en déplacement du fil à travers le faisceau lumineux.

Le fil est éclairé par des faisceaux laser, le fil se trouvant entre la source du faisceau et un dispositif d'acquisition d'image. A des instants d'acquisition successifs lors du déplacement du fil à travers le faisceau lumineux, on acquiert un signal optique formé à partir du faisceau lumineux émis et partiellement interrompu par le fil.

Le document JP 2005 037221 décrit un procédé de contrôle optique de l'état d'un fil de découpe.

Le document CN203965287U décrit un procédé de contrôle optique de l'état d'un fil de découpe.

La présente invention vient améliorer la situation.

## Objet de l'invention

A cet effet, l'invention concerne un procédé de contrôle d'un fil de découpe ayant une surface extérieure présentant des aspérités formées par des grains abrasifs, lesdits grains ayant un diamètre moyen $D_g$ donné, comprenant les étapes suivantes :

- émission d'un faisceau lumineux délimité par deux plans parallèles ;
- entraînement en déplacement du fil à travers le faisceau lumineux, de façon linéaire, l'angle entre le fil et les plans du faisceau étant compris entre 85° et 95°, notamment entre 88° et 92°, notamment encore égal à 90°;
- et, à des instants d'acquisition successifs lors du déplacement du fil à travers le faisceau lumineux, acquisition d'un signal optique formé à partir du faisceau lumineux émis et partiellement interrompu par le fil, dans une fenêtre d'analyse du fil, et détermination, à partir du signal optique acquis, d'une valeur de diamètre apparent du fil.

La fenêtre d'analyse du fil a une largeur comprise entre $D_g/2$ et $4 \times D_g$.

L'invention permet de collecter un volume limité de données relatives aux diamètres apparents du fil, sur une grande longueur de fil, et de contrôler le fil de façon simple, rapide et précise. Le procédé de contrôle de l'invention s'appuie sur l'utilisation d'un faisceau lumineux de type plan (c'est-à-dire délimité par deux plans parallèles séparés par une certaine distance). Le faisceau lumineux crée une fenêtre d'analyse du fil, sur une petite portion de celui-ci, dont la largeur est adaptée à la détection des grains. A travers cette fenêtre d'analyse, on fait défiler le fil à contrôler orthogonalement ou sensiblement orthogonalement aux plans du faisceau. Durant le défilement du fil, le faisceau est partiellement interrompu par le fil qui le traverse, au niveau d'une zone d'interruption. Le procédé de contrôle collecte ensuite un signal optique comportant tout ou partie du faisceau lumineux émis et intégrant une coupure (c'est-à-dire une interruption du signal), correspondant à la zone d'interruption par le fil. La collecte du signal optique est par exemple réalisée à l'aide d'un simple capteur optique linéaire (c'est-à-dire comportant une seule ligne ou rangée d'éléments de photo-détection). Le signal optique collecté est ensuite converti en une valeur de diamètre apparent correspondant à une hauteur de la zone d'interruption du faisceau.

Avantageusement, la fenêtre d'analyse ayant une largeur donnée, on utilise une fréquence d'acquisition du signal optique qui est inférieure ou égale à la vitesse de déplacement du fil divisé par la largeur de la fenêtre d'analyse.

Avantageusement encore, à partir des valeurs de diamètres apparents acquises, on détermine au moins l'une des informations du groupe comportant une valeur moyenne de diamètre apparent sur au moins un tronçon du fil, un écart type du diamètre apparent sur au moins un tronçon du fil, une hauteur maximale de saillie des grains abrasifs et l'identification d'une zone dépourvue de grains abrasifs. Grâce à cela, les portions de fil successivement analysées ne se chevauchent pas.

Selon l'invention, le procédé comprend une étape de réalisation d'un histogramme de données à partir des valeurs de diamètres apparents acquises, l'histogramme de données représentant une distribution des valeurs de diamètres apparents acquises. Les données brutes mesurées (c'est-à-dire les valeurs de diamètres apparentés mesurées) permettent d'obtenir différentes caractéristiques du fil, par des traitements simples.

Selon l'invention, le procédé comprend une étape d'identification d'un pic dans l'histogramme, ledit pic étant symétrique et centré autour d'une valeur de diamètre apparent correspondant au diamètre du fil sans grain abrasif. Le procédé de contrôle comprend un traitement de données qui comporte l'établissement d'un histogramme à partir des données de diamètres apparents mesurées.

L'histogramme ayant une courbe enveloppe, lors de l'étape d'identification du pic, on peut détecter un point bas et un sommet du pic sur une partie de la courbe enveloppe de l'histogramme qui couvre les valeurs de diamètres apparents les plus faibles de l'histogramme et déterminer, parmi un ensemble de courbes prédéfinies en forme de pic symétrique, la courbe en forme de pic qui s'ajuste le mieux à la portion de courbe enveloppe reliant le point bas et le sommet du pic. L'identification du pic dans l'histogramme permet d'obtenir le diamètre extérieur du fil dépourvu de grain.

Dans un mode de réalisation particulier, les courbes prédéfinies en forme de pic symétrique sont définies par des fonctions gaussiennes.

Dans un premier mode de réalisation, le sommet du pic correspond à une amplitude maximale de l'histogramme.

Dans un deuxième mode de réalisation, le sommet du pic correspond à un point d'inflexion de la courbe enveloppe de l'histogramme.

Avantageusement, le fil comportant une âme, de diamètre donné, recouverte d'une couche de matériau liant, il est prévu une étape de calcul de l'épaisseur $l$ de la couche de matériau liant à l'aide de l'équation

$$ l = \frac{(D_{pic} - \varnothing_{âme})}{2}, $$

où $D_{pic}$ et $\varnothing_{âme}$ représentent respectivement le diamètre apparent du fil correspondant au sommet du pic et le diamètre de l'âme du fil.

Selon l'invention, le procédé comprend une étape de calcul d'une probabilité de ne détecter aucun grain abrasif lors d'une mesure dans la fenêtre d'analyse, lors de laquelle on calcule le rapport entre la surface du pic et la surface totale délimitée par la courbe enveloppe de l'histogramme.

Selon l'invention, on détermine la densité de grains abrasifs à partir de l'équation $d_G =$

$$\frac{1-\sqrt{p(2\overline{G})}}{2\theta_c(R_{\text{âme}}+l)*w}$$ où $p(2\overline{G})$ représente la probabilité de ne détecter aucun grain abrasif lors d'une mesure, $R_{\text{âme}}$ représente le rayon de l'âme du fil, $l$ représente l'épaisseur de la couche de matériau liant, w représente la largeur de la fenêtre d'analyse, et $\theta_c$ représente un angle critique correspondant à une position angulaire d'un grain abrasif à la surface extérieure du fil, au-delà de laquelle un grain abrasif n'est pas détecté lors d'une mesure.

Le procédé peut aussi comprendre une étape de calcul d'un taux c de couverture du fil par les grains abrasifs à l'aide de la relation $c = 100 \times d_G \times \pi \times r^2$.

Dans une variante de réalisation, le procédé comprend l'émission d'un nombre k de faisceaux lumineux, k étant strictement supérieur à 1, les k faisceaux ayant des directions de propagation respectives qui sont décalées angulairement l'une par rapport à l'autre, par

$$\theta_k = \frac{2\pi}{k}.$$

exemple d'un angle    On peut ainsi contrôler l'homogénéité de la distribution des grains abrasifs sur tout le pourtour du fil.

Le procédé peut être mis en oeuvre au sein d'un dispositif de découpe filaire et comprendre une étape de nettoyage du fil avant qu'il ne traverse le faisceau lumineux.

L'invention concerne aussi un système de contrôle d'un fil de découpe ayant une surface extérieure présentant des aspérités formées par des grains abrasifs, lesdits grains ayant un diamètre moyen $D_g$ donné, comprenant :

- un dispositif d'émission d'un faisceau lumineux délimité par deux plans parallèles ;
- un dispositif d'entraînement en déplacement du fil à travers le faisceau lumineux, de façon linéaire, l'angle entre le fil et les plans du faisceau étant compris entre 85° et 95°, notamment entre 88° et 92°, notamment encore égal à 90°;
- un capteur optique destiné à acquérir à un signal optique formé à partir du faisceau lumineux émis et partiellement interrompu par le fil, dans une fenêtre d'analyse, à des instants d'acquisition successifs lors du déplacement du fil à travers le faisceau lumineux, et à déterminer, à partir du signal optique acquis, une valeur de diamètre apparent du fil.

La fenêtre d'analyse a une largeur comprise entre $D_g/2$ et $4 \times D_g$.

Le système comprend un dispositif de traitement de données comportant un module de réalisation d'un histogramme de données à partir des valeurs de diamètres apparents acquises, l'histogramme de données représentant une distribution des valeurs de diamètres apparents acquises, le dispositif de traitement comportant un module d'identification d'un pic dans l'histogramme, ledit pic étant symétrique et centré autour d'une valeur de diamètre apparent correspondant au diamètre du fil sans grain abrasif, le dispositif de traitement comprenant un module de détermination de la densité de grains abrasifs à partir de l'équation

$$d_G = \frac{1-\sqrt{p(2\overline{G})}}{2\theta_c(R_{\text{âme}}+l)*w}$$

où $p(2\overline{G})$ représente la probabilité de ne détecter aucun grain abrasif lors d'une mesure qui est calculée par le rapport entre la surface du pic et la surface totale délimitée par la courbe enveloppe de l'histogramme, $R_{\text{âme}}$ représente le rayon de l'âme du fil, $l$ représente l'épaisseur de la couche de matériau liant, w représente la largeur de la fenêtre d'analyse, et $\theta_c$ représente un angle critique correspondant à une position angulaire d'un grain abrasif à la surface extérieure du fil, au-delà de laquelle un grain abrasif n'est pas détecté lors d'une mesure.

Avantageusement, le système comprend tout ou partie des caractéristiques additionnelles suivantes :

- le capteur optique comprend seulement une rangée de n photo-détecteurs ou trois rangées de photo-détecteurs RVB ;
- le fil comportant une âme, de diamètre donné, recouverte d'une couche de matériau liant, le dispositif de traitement comprend un module de calcul de l'épaisseur $l$ de la couche de matériau liant à l'aide de l'équation $l = \dfrac{(D_{pic}-\emptyset_{\text{âme}})}{2}$, où $D_{pic}$ et $\emptyset_{\text{âme}}$ représentent respectivement le diamètre apparent du fil correspondant au sommet du pic et le diamètre de l'âme du fil ;
- le dispositif de traitement comprend un module de calcul d'un taux c de couverture du fil par les grains abrasifs à l'aide de la relation $c = 100 \times d_G \times \pi \times r^2$.

L'invention concerne aussi un équipement de découpe filaire à l'aide d'un fil de découpe ayant une surface extérieure présentant des aspérités formées par des grains abrasifs, lesdits grains ayant un diamètre moyen $D_g$ donné, caractérisé en ce qu'il intègre le système de contrôle tel que défini ci-dessus et en ce que le dispositif d'entraînement en déplacement du fil à travers le faisceau lumineux comprend des éléments d'entraînement du système de découpe.

**Description sommaire des dessins**

L'invention sera mieux comprise à l'aide de la description suivante d'une forme de réalisation particulière du procédé de contrôle et du dispositif de contrôle de l'invention, en référence aux dessins annexés sur lesquels :

- Les figures 1A, 1B, 1C et 1D illustrent le principe du fonctionnement du dispositif de contrôle de l'invention, pour des configurations différentes du fil ;
- La figure 2 représente une image d'un fil et, schématiquement, une fenêtre de mesure ou d'analyse du fil ;
- La figure 3 représente une image agrandie d'une fenêtre de mesure ou d'analyse d'une portion du fil ;
- Les figures 4A, 4B et 4C représentent des portions de fil mesurées dans la fenêtre de mesure respectivement sans grain abrasif, avec un grain abrasif et avec deux grains abrasifs ;
- La figure 5 représente un exemple d'histogramme de valeurs ou données de diamètres apparents du fil mesurées dans la fenêtre d'analyse le long du fil en mouvement ;
- La figure 6A représente une courbe enveloppe de l'histogramme de la figure 4 et un pic correspondant à des portions de fil mesurées sans grain abrasif ;
- La figure 6B représente une autre courbe enveloppe d'histogramme et un pic correspondant à des portions de fil mesurées sans grain abrasif ;
- La figure 7 représente un organigramme des étapes du procédé de contrôle d'un fil de découpe, selon un mode de réalisation particulier de l'invention ;
- La figure 8 représente un schéma bloc fonctionnel du système de contrôle de l'invention, selon un exemple de réalisation ;
- Les figures 9A et 9B représentent schématiquement deux structures différentes de fil de découpe à grains abrasifs liés.

**Description détaillée de modes de réalisation particuliers de l'invention**

L'invention permet de contrôler et/ou de caractériser un fil de découpe 100 ayant une surface extérieure qui présente des aspérités formées par des grains abrasifs, par exemple des diamants. Ce type de fil est couramment appelé « fil diamanté ».

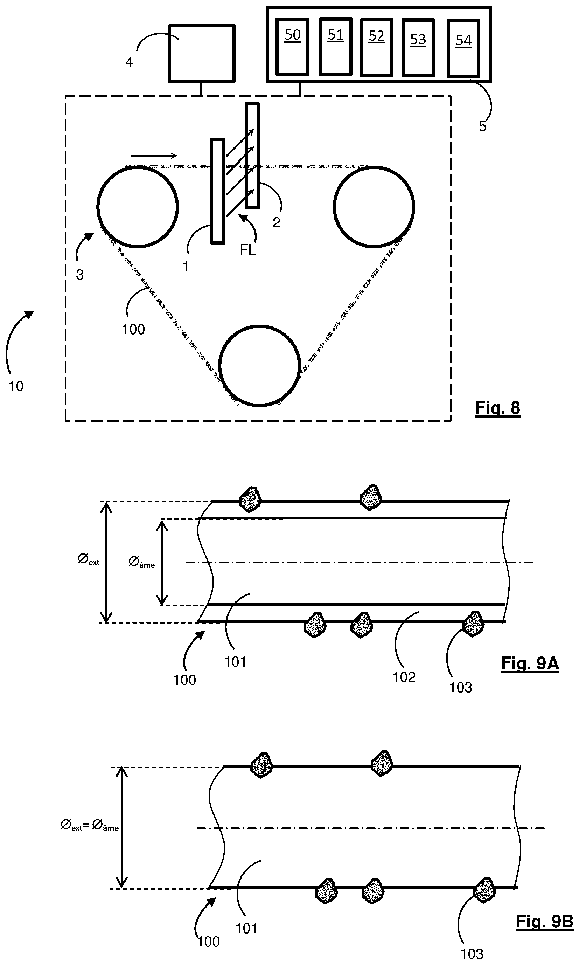

Structurellement, en référence à la figure 9A, le fil de découpe 100 peut comprendre une âme métallique 101, par exemple en acier, de forme cylindrique, recouverte d'une couche de matériau liant 102 dans laquelle des grains abrasifs 103 sont partiellement enrobés. En variante, les grains abrasifs 103 sont directement incrustés dans l'âme 101 du fil (dépourvu de liant), comme représenté sur la figure 9B. Le diamètre $\phi_{âme}$ de l'âme 101 est compris entre 30 $\mu$m et 700 $\mu$m, préférentiellement entre 50 $\mu$m et 160 $\mu$m. Il est indiqué par le fabricant. Sur la figure 9A, on note $\phi_{ext}$ le diamètre extérieur du fil.

Le contrôle du fil est réalisé par un système de contrôle 10 qui comprend ici, en référence à la figure 8 :

- un dispositif 1 d'émission d'un faisceau lumineux plan FL ;
- un dispositif 3 d'entraînement du fil adapté pour faire défiler le fil à travers le faisceau lumineux de sorte à interrompre localement (ou partiellement) le faisceau lumineux ;
- un dispositif d'acquisition 2 comportant un capteur optique positionné au droit du dispositif d'émission 1 et adapté pour mesurer ou collecter, dans une fenêtre de mesure ou d'analyse FA, un signal optique formé à partir du faisceau lumineux FL émis et comportant une coupure ou interruption correspondant à l'interruption du faisceau lumineux FL par le fil ;
- un dispositif de pilotage 4 ;
- un dispositif de traitement 5.

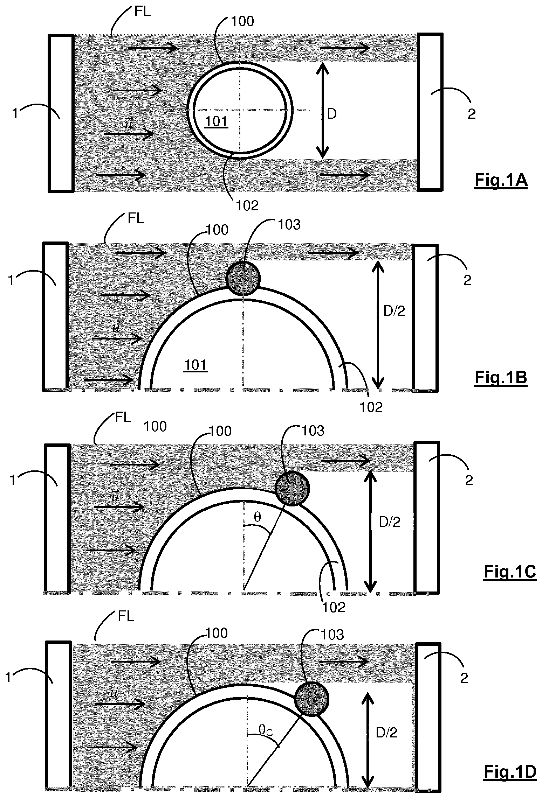

En référence aux figures 1A à 1D, le principe de contrôle d'un fil de découpe 100 selon l'invention est le suivant :

- on fait défiler le fil de découpe 100 à travers le faisceau lumineux FL, orthogonalement ou sensiblement orthogonalement aux plans du faisceau FL,
- en le traversant, le fil interrompt localement le faisceau FL et
- le capteur optique 2 collecte un signal optique qui correspond au faisceau FL partiellement interrompu dans la fenêtre d'analyse FA, et mesure, à des instants d'acquisition (ou de mesure) successifs, des hauteurs D d'interruption du faisceau ; ces hauteurs D correspondent à des diamètres apparents du fil successivement mesurés le long de celui-ci, qui varient selon la présence ou non d'un ou plusieurs grains abrasifs sur le pourtour du fil analysé.

Le dispositif d'émission 1 comprend une source lumineuse et des éléments optiques associés adaptés pour produire un faisceau lumineux plan (c'est-à-dire délimité par deux plans parallèles et séparés par une épaisseur E orthogonalement à ces plans). Le faisceau lumineux FL est émis suivant une direction de propagation $\vec{u}$. La source lumineuse peut être laser ou autre, par exemple une LED. La longueur d'onde peut être quelconque, par exemple dans le visible ou l'infrarouge.

Le capteur 2 est ici un capteur optique linéaire, par exemple de technologie CCD ou CMOS, comprenant une matrice de 1xn photo-détecteurs, également appelés cellules photosensibles ou pixels. Autrement dit, le capteur optique 2 comprend une seule colonne de n photo-détecteurs ou cellules photosensibles ou pixels. Les photo-détecteurs sont par exemple des photodiodes. On pourrait toutefois utiliser d'autres types de photo-détecteurs (par exemple photomultiplicateurs, photoconducteurs ou autre). Le terme « linéaire » signifie que les photo-détecteurs (ou cellules photosensibles ou pixels) sont disposés selon une seule direction, c'est-à-dire selon une seule colonne, en « barrette ». Les n photo-détecteurs forment une surface de détection, ici en forme de rectangle, qui est orthogonale à la direction de propagation $\vec{u}$ du faisceau lumineux FL. Cette surface de détection est disposée au droit du dispositif d'émission 1 de sorte à collecter un signal optique formé à partir du faisceau lumineux FL. Des éléments optiques (lentille, fente ou autre) peuvent éventuellement être associés aux photo-détecteurs pour former le signal optique collecté. Les photo-détecteurs sont ici adaptés pour détecter des niveaux de gris.

Dans une variante de réalisation, le capteur optique linéaire 2 est capable de détecter des couleurs. Par exemple, il comprend trois colonnes de photo-détecteurs parallèles, correspondant aux trois couleurs de base RVB (rouge, vert, bleu).

Lorsque le fil 100 défile à travers le faisceau lumineux FL, celui-ci est partiellement interrompu par le fil sur une hauteur D. Le capteur optique 2 mesure cette hauteur D qui correspond à un diamètre apparent du fil pour une portion du fil contenue dans la fenêtre d'analyse FA, comme cela est illustré sur les figures 1A à 1D qui représentent le fil 100 en section transversale et le faisceau lumineux FL interrompu par ce fil. Sur la figure 1A, la portion de fil mesurée ne comporte aucun grain abrasif. Sur les figures 1B et 1C, la portion de fil mesurée (représentée partiellement) comporte un grain abrasif 103 qui augmente le diamètre apparent du fil. La hauteur de dépassement du grain détectée varie selon la position angulaire du grain abrasif. Il existe un angle critique $\theta_C$ de position angulaire du grain 103, au-delà duquel le grain 103 n'est plus détecté par le faisceau lumineux FL. Cet angle critique $\theta_C$ peut être estimé par l'équation suivante :

$$\theta_C = a \times cos\left(\frac{R + l - r}{r + e + R}\right)$$

où :

- R représente le rayon de l'âme du fil 101 ;
- r représente le rayon moyen des grains abrasifs 103 du fil 100 ;
- l représente l'épaisseur de la couche 102 de matériau liant ;
- e représente la profondeur d'enfoncement des grains abrasifs dans le matériau liant 102.

Le capteur optique linéaire 2 est destiné à effectuer des mesures successives du diamètre apparent du fil sur des portions de fil successives, dans la fenêtre d'analyse, ou de mesure, FA, de largeur w. La largeur *w* de la fenêtre de mesure FA est égale soit à l'épaisseur réelle E du faisceau FL, soit à une épaisseur contrôlée du faisceau FL, réduite par rapport à son épaisseur réelle E. Dans le second cas, la largeur contrôlée w de la fenêtre d'analyse FA peut correspondre à la largeur de la surface de détection du capteur 2. Cette largeur peut en variante être contrôlée par un élément optique associé tel qu'une fente ou une lentille. En toute hypothèse, la largeur *w* de la fenêtre de mesure est adaptée à la taille des grains abrasifs 103. Elle est comprise entre $D_g/2$ et 4 * $D_g$, où

$D_g$ est le diamètre moyen des grains abrasifs 103 (ce paramètre étant généralement fourni par le fabricant). Typiquement, le diamètre moyen $D_g$ est de l'ordre de $8\mu m$ à $40\mu m$. Grâce à cela, les mesures sont pertinentes. Si la fenêtre d'analyse FA était trop large, la mesure ne permettrait pas de distinguer, le cas échéant, différents grains abrasifs 103 présents simultanément dans la fenêtre d'analyse FA. A l'inverse, si la fenêtre d'analyse FA était trop étroite, un même grain 103 risquerait d'être détecté lors de plusieurs mesures successives, ce qui compliquerait l'interprétation des données mesurées et leur traitement.

La résolution spatiale du capteur optique 2 doit être adaptée pour permettre la détection des grains abrasifs 103. Elle est avantageusement inférieure à $D_g/4$, de préférence inférieure ou également à $D_g/10$.

Le dispositif 3 d'entraînement du fil 100 est adapté pour entraîner en déplacement le fil 100, de façon linéaire, à travers le faisceau lumineux FL. L'angle entre le fil 100 et les plans limites du faisceau FL est ici égal à 90°. Il peut toutefois être compris entre 87° et 93°, notamment entre 88.5° et 91.5°. Autrement dit, le fil 100 est entraîné en défilement de sorte à couper le faisceau lumineux plan FL orthogonalement, ou sensiblement orthogonalement, à celui-ci. Le fil est entraîné à une vitesse fixe v par le dispositif d'entraînement 3. Celui-ci peut comprendre par exemple des guide-fils et/ou des poulies et/ou un équipement de trancannage ou tout autre équipement adapté pour faire défiler le fil à une vitesse contrôlée. En variante, dans le cas où le système de contrôle est intégré dans un équipement de découpe filaire ou scie à fil, le dispositif d'entraînement comprend des éléments d'entraînement de l'équipement de découpe.

La vitesse maximale admissible de défilement du fil, notée $v_{max}$, peut être limitée par la capacité du détecteur 2 à acquérir un signal fiable et représentatif, autrement dit par la fréquence maximale d'acquisition permise par le détecteur 2. En pratique, cela dépend de nombreux facteurs : temps (ou durée) d'exposition, temps de transfert des charges, présence de bruit optique (par exemple dû à un éclairage parasite) ou numérique, largeur du faisceau utile, technologie utilisée (CCD ou CMOS), sensibilité du capteur ou autres facteurs. Néanmoins, la vitesse maximale de défilement du fil, $v_{max}$, peut être estimée, en considérant qu'un objet situé dans la fenêtre d'analyse doit y rester durant un temps d'exposition donné. Autrement dit, la vitesse maximale $v_{max}$ de défilement du fil doit être inférieure ou égale au produit de la largeur w de la fenêtre d'analyse FA par la fréquence d'acquisition maximale $f_{max}$ du détecteur 2 : $v_{max} \leq w \times f_{max}$. Ainsi pour une largeur de fenêtre d'analyse typique de $30\mu m$ et une fréquence d'acquisition maximale d'un micromètre optique commercial de 16 kHz (par exemple un micromètre de série LS9000 de la marque Keyence®), la vitesse maximale de défilement du fil doit être inférieure à 0,48 m/s, soit environ 0,5 m/s, et donc inférieure à 30 m/min. Notons que ce type du dispositif commercial est idéalement adapté pour le contrôle des fils diamantés au cours de leur fabrication, où les vitesses de défilement sont typiquement de l'ordre de 8 à 20 m/min. Certains détecteurs linéaires ont néanmoins des fréquences d'acquisition ultra-rapides, typiquement de un ou plusieurs mégahertz. Ils autorisent par conséquent des vitesses maximales de défilement du fil pouvant aller jusqu'à 30 m/s voire 100 m/s. La relation $v_{max} \leq w \times f_{max}$ permet d'évaluer l'ampleur de la vitesse maximale de défilement pour un détecteur 2 autorisant une fréquence d'acquisition maximale. Toutefois, en cas d'utilisation d'une fréquence basse d'acquisition, on pourrait ne pas tenir compte de cette relation.

Le dispositif de pilotage 4 est adapté pour piloter le fonctionnement du dispositif d'émission 1, du capteur optique 2 et du dispositif d'entraînement 3. Il pilote notamment l'acquisition des mesures optiques par le capteur 2 avec une fréquence d'acquisition f. La vitesse (effective) de défilement v du fil et la fréquence (effective) d'acquisition f sont avantageusement choisies pour éviter un chevauchement, ou superposition partielle, des portions de fil successivement analysées à travers la fenêtre d'analyse FA. Dans un premier mode de réalisation, la fréquence d'acquisition f et la vitesse de défilement v sont choisies de sorte à ce que $f = v/w$ (w étant la largeur de la fenêtre d'analyse FA). Dans ce cas, les mesures successives du capteur optique 2 permettent d'analyser le fil sur toute la longueur du fil qui défile à travers la fenêtre d'analyse FA, sans redondance, les portions de fil successivement analysées étant contiguës (sans chevauchement). Cela permet également de détecter aisément des régions du fil dépourvues de grains abrasifs, dans le cas où le capteur mesure une succession de diamètres apparents égaux au diamètre extérieur du fil sans grain. Dans un deuxième mode de réalisation, la fréquence d'acquisition f et la vitesse de défilement v sont choisies de sorte à ce que $f < v/w$. Dans ce cas, le fil n'est pas mesuré sur la totalité de la longueur de fil qui traverse la fenêtre d'analyse FA. Entre deux mesures successives, une portion de fil traverse la fenêtre d'analyse FA sans être faire l'objet d'une mesure. Ce mode de réalisation permet de réduire la quantité de données mesurées. On pourrait aussi envisager de choisir la fréquence d'acquisition f et la vitesse de défilement v de sorte à ce que $f > v/w$, mais ce mode de réalisation conduit à la collecte d'une quantité de données importante.

Le dispositif de traitement 5 est adapté pour traiter les données mesurées comme cela sera explicité plus loin. Le traitement de données vise à obtenir des caractéristiques relatives au fil 100, notamment des caractéristiques morphologiques.

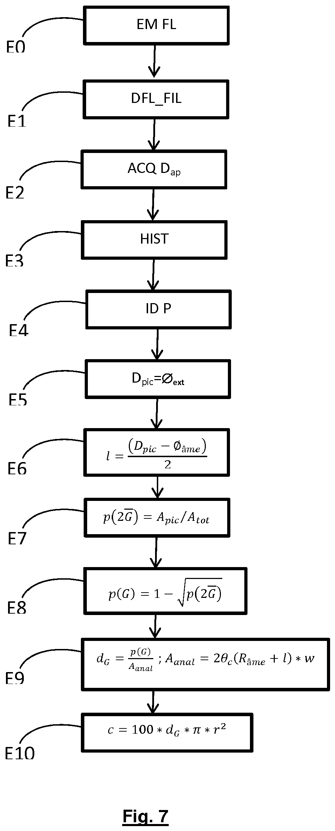

On va maintenant décrire, en référence à la figure 7, le procédé de contrôle du fil de découpe 100.

Le procédé comprend une étape E0 d'émission du faisceau lumineux plan FL présentant une épaisseur E, orthogonalement au plan du faisceau (c'est-à-dire notamment à l'un des deux plans limitant le faisceau FL), qui est comprise entre $D_g/2$ et $4 \times D_g$ ($D_g$ étant le diamètre moyen des grains). Cette étape est mise oeuvre par le dispositif d'émission 1 sous la commande du dispositif de pilotage 4.

De façon concomitante, le fil de découpe 100 est entraîné en déplacement à travers le faisceau lumineux, de façon linéaire, lors d'une étape E1. Comme précédemment indiqué, le fil se déplace selon une direction orthogonale au plan du faisceau lumineux FL, avec une précision supérieure à $\pm 3°$ d'angle, de préférence $\pm 1.5°$ d'angle. La vitesse v de déplacement du fil est fixe et comprise entre 0,1m/s et 40 m/s.

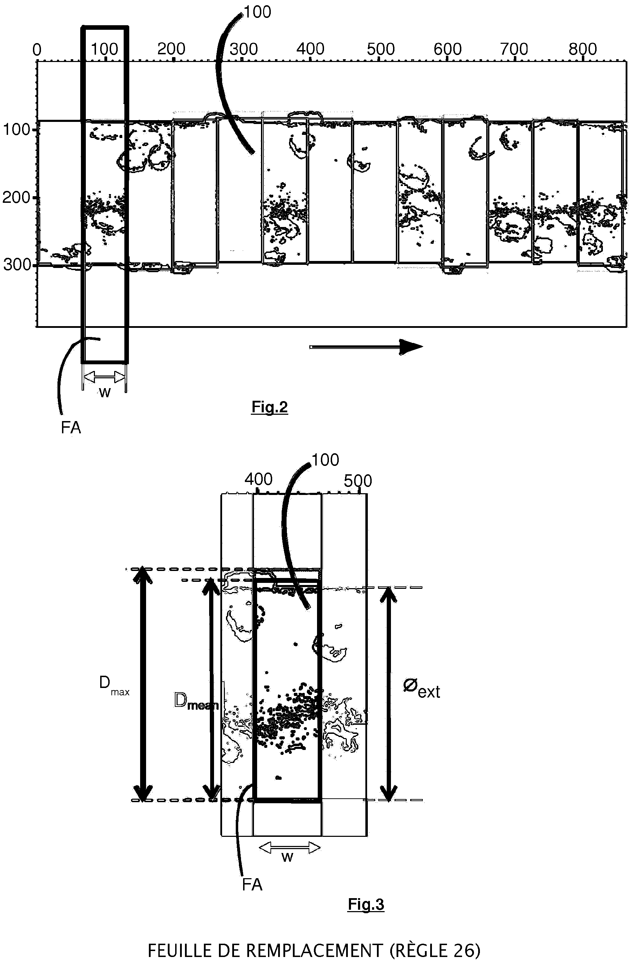

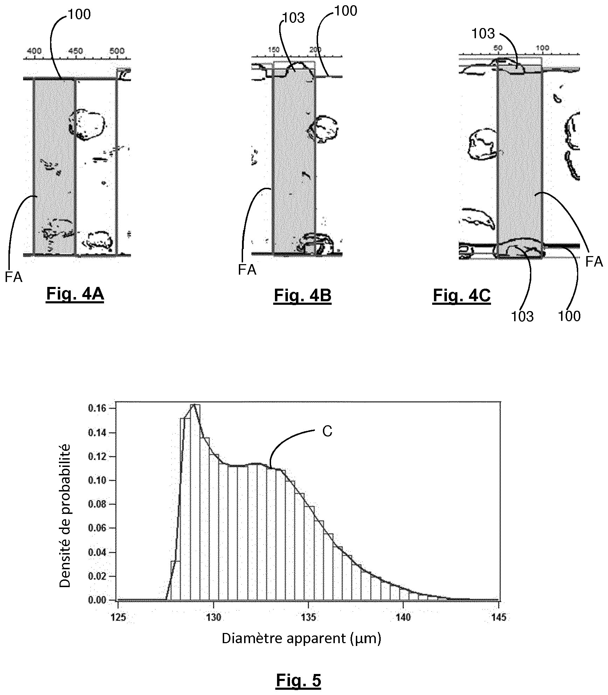

Le procédé comprend ensuite une étape E2 de mesure ou d'acquisition de données de diamètres apparents du fil, pendant le déplacement du fil 100 à travers le faisceau lumineux FL. Lors de l'étape E2, à chaque instant d'acquisition d'une succession d'instants d'acquisition lors du déplacement du fil 100 à travers le faisceau lumineux FL, le capteur optique 2 collecte ou acquiert, dans la fenêtre d'analyse FA, un signal optique formé à partir du faisceau lumineux émis FL et partiellement interrompu par le fil 100. Dans l'exemple décrit ici, le signal optique collecté est en niveaux de gris. A partir du signal optique acquis, le capteur 2 détermine un diamètre apparent du fil. A cet effet, le signal optique acquis est converti en une valeur correspondant à une hauteur D sur laquelle le faisceau lumineux FL est interrompu. Cette valeur D est par définition le diamètre apparent de la portion de fil contenue dans la fenêtre d'analyse FA. Le diamètre apparent est fonction du diamètre de l'âme 101 du fil 100, le cas échéant augmenté de l'épaisseur de la couche 102 de matériau liant, et de la présence ou non d'un ou de plusieurs grains abrasifs 103 dans la fenêtre d'analyse FA sur le pourtour du fil 100, comme cela apparaît sur les figures 4A à 4C. On peut envisager différents modes de mesure du diamètre apparent D, selon la sensibilité de détection du capteur optique 2, comme illustré par la figure 3. Dans un premier mode de mesure, le capteur 2 mesure un diamètre apparent « $D_{mean}$ » qui correspond au diamètre extérieur $\emptyset_{ext}$ du fil 100 augmenté, le cas échéant, d'une hauteur moyenne de dépassement du ou des grains abrasifs sur la portion de fil, de longueur w, couverte par la fenêtre d'analyse FA. Dans un deuxième mode de mesure, le capteur 2 mesure un diamètre apparent « $D_{max}$ » qui correspond au diamètre extérieur $\emptyset_{ext}$ du fil 100 augmenté, le cas échéant, de la hauteur maximale de dépassement du ou des grains abrasifs 103 sur la portion de fil, de longueur w, couverte par la fenêtre d'analyse FA.

Pendant la durée d'acquisition du capteur 2, chaque pixel (ou photo-détecteur ou cellule photosensible) du capteur linéaire détecte une quantité de lumière reçue. Certains pixels sont entièrement masqués par le fil 100 et ne détectent pas de lumière ou une quantité très faible, voire quasi-nulle, de lumière correspondant à une lumière parasite. Ces pixels masqués par le fil détectent une quantité de lumière inférieure à une valeur minimale prédéfinie (nulle ou quasi-nulle). D'autres pixels, situés dans la partie du faisceau lumineux non coupée par le fil, reçoivent directement le faisceau lumineux et détectent une quantité importante de lumière qui est égale, ou sensiblement égale, à une valeur d'intensité lumineuse nominale. Enfin, une minorité de pixels, situés entre ceux qui ne détectent pas de lumière (ou une faible lumière parasite) et ceux qui détectent une lumière d'intensité nominale, détectent une lumière d'intensité intermédiaire comprise entre une intensité nulle (ou quasi-nulle) et l'intensité nominale. Ces pixels sont ceux situés au droit du bord du fil et couvrent une région de bord du fil. Ils sont donc susceptibles d'être partiellement masqués par un (voire plusieurs) grain abrasif. Autrement dit, le faisceau lumineux se dirigeant vers un tel pixel, dit « de bord », est en partie bloquée par un (voire plusieurs) grain abrasif. L'intensité lumineuse reçue par le pixel de bord dépend de la taille du diamant. Par exemple, sur la figure 3, du fait de la présence du diamant, un pixel situé au droit du bord supérieur du fil et de ce diamant, va détecter une intensité lumineuse intermédiaire entre la valeur nominale et la valeur minimale (nulle ou quasi-nulle). Pour déterminer le diamètre apparent du fil, il convient de définir un seuil d'intensité lumineuse correspondant au bord du diamètre apparent : si l'intensité lumineuse détectée est inférieure à ce seuil, le pixel détecte le fil, et si l'intensité lumineuse détectée est supérieure à ce seuil, le pixel ne détecte pas le fil. Dans le premier mode de mesure, le seuil a une valeur dite « moyenne » ou « intermédiaire ». Cette valeur moyenne peut dépendre de la fraction de la région couverte par le pixel qui est occupée par un grain. Par exemple, si le grain occupe X% de la région couverte par le pixel, le seuil peut avoir une valeur adaptée pour le diamètre apparent « $D_{mean}$ » soit égal au diamètre extérieur $\emptyset_{ext}$ augmenté de X% de la hauteur de la région couverte (selon une direction orthogonale au bord du fil). Dans le deuxième mode de mesure, le seuil a une valeur sensiblement égale à la valeur de l'intensité nominale avec une tolérance de $\pm x$% de l'intensité nominale, où x est inférieur à 10%, avantageusement inférieur ou égal à 5%, avantageusement encore égal à 3%.

Les mesures ou acquisitions sont réalisées avec une fréquence d'acquisition f. Par exemple, la fréquence d'acquisition f est égale ici à $v/w$, où v est la vitesse de défilement du fil et w la largeur de la fenêtre d'analyse FA. L'étape d'acquisition E2 permet ainsi d'obtenir une succession de valeurs de diamètres apparents du fil 100 sur une succession de portions de fil couvrant la totalité de la longueur de fil analysée.

La méthode de mesure de l'invention présente l'avantage de collecter un volume de données limité.

Les données de diamètres apparents acquises (autrement dit les données « brutes » mesurées) permettent de déterminer, par simple analyse visuelle du signal de données mesurées ou par un traitement simple des données mesurées, différentes caractéristiques du fil relatives à un tronçon du fil analysé ou à la totalité de la longueur du fil analysée. Ces caractéristiques comprennent par exemple une valeur moyenne de diamètre apparent, un écart type du diamètre apparent, une hauteur maximale de saillie des grains abrasifs et/ou l'identification d'une zone dépourvue de grains abrasifs. Les données de diamètres apparents mesurées permettent également une comparaison de ces caractéristiques de fil pour différents tronçons du fil ou pour différents fils.

L'étape E2 d'acquisition de données est suivie d'un traitement de ces données. Le traitement des données comprend ici une première étape E3 de réalisation d'un histogramme des données de diamètres apparents acquises, comme représenté sur la figure 5. L'histogramme représente la distribution des valeurs de diamètres apparents mesurées. Il comprend en abscisses les valeurs de diamètre apparent exprimées en μm et en ordonnées la densité de probabilité d'un diamètre apparent. La réalisation d'un histogramme nécessite l'acquisition préalable d'un échantillon statistique contenant un nombre suffisant de données mesurées, ou points de mesure (correspondant à des valeurs de diamètre apparent mesurées). L'échantillon comprend avantageusement au moins 30000 points de mesure, de préférence au moins 80000 points de mesure. Dans le cas d'une fenêtre d'analyse ayant une largeur w de 30 μm, cela correspond à une longueur de fil analysée d'1 mètre. La taille de l'échantillon statistique est avantageusement ajustée en fonction de la répartition plus ou moins homogène des grains abrasifs. Plus la répartition est inhomogène, plus le nombre de points de mesure de l'échantillon statistique doit être augmenté. En toute hypothèse, un nombre de points de mesure au moins égal à 200000 est suffisant.

L'histogramme comporte un ensemble de classes de diamètres. La largeur d'une classe est avantageusement supérieure ou égale à la précision de la mesure qui dépend de la précision du capteur. Avantageusement encore, le nombre de classes est supérieur ou égal à 15.

Sur la figure 5, on a représenté un exemple d'histogramme obtenu par analyse d'un fil de découpe diamanté comportant une âme métallique ayant un diamètre de 120 μm et des diamants de diamètre compris entre 12 et 25 μm (de marque ASAHI® référencé 0.12-12/25 HICON). L'histogramme contient environ 30 classes ayant chacune une largeur (ou couverture) de 0,5 μm. Une courbe enveloppe C de l'histogramme est également représentée.

L'histogramme permet en lui-même, par simple analyse visuelle ou traitement numérique simple, d'obtenir certaines caractéristiques morphologiques du fil. Par exemple, l'histogramme de la figure 5 comprend un pic initial qui correspond au diamètre apparent du fil sans grains abrasifs. Si l'amplitude (ou hauteur) de ce pic initial est importante, cela révèle une faible quantité de grains abrasifs globalement le long du fil, ce qui réduit le pouvoir d'abrasion du fil et la productivité de la découpe. Un étalement important de l'histogramme révèle une répartition hétérogène des grains abrasifs. Or, il est préférable d'avoir une répartition homogène des grains pour que le nombre de diamants en contact simultané avec la pièce à découper soit maximum. La présence dans l'histogramme d'une longue traine couvrant des diamètres apparents importants révèle la présente sur le fil de rares grains abrasifs à forte protubérance, néfastes pour la qualité de la découpe.

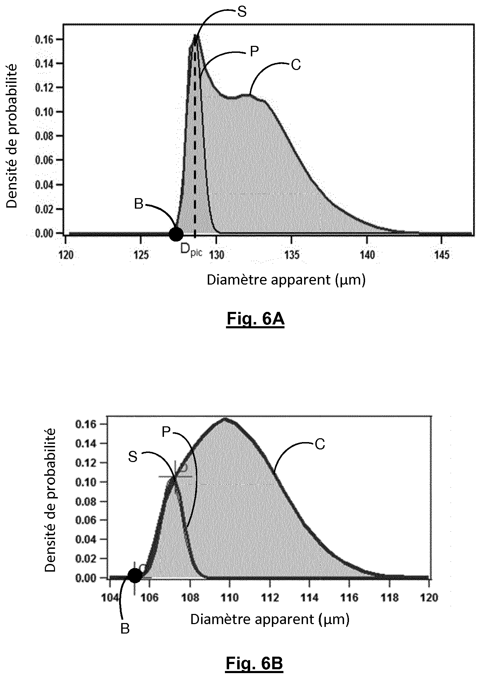

Le traitement peut également comprendre une étape E4 d'identification d'un pic P dans l'histogramme. Ce pic P est symétrique et centré autour d'une valeur de diamètre apparent $D_{pic}$ correspondant au diamètre du fil sans grain abrasif. Il correspond aux cas où aucun grain abrasif n'est présent dans la fenêtre d'analyse FA. Sur la figure 6A, on a représenté la courbe enveloppe C de l'histogramme de la figure 5 et le pic P correspondant. Sur la figure 6B, on a représenté la courbe enveloppe d'un autre exemple d'histogramme et le pic P correspondant.

L'identification du pic P est basée sur le fait que le diamètre apparent du fil 100 dans le cas où aucun grain abrasif n'est présent dans la fenêtre d'analyse FA est nécessairement l'un des diamètres les plus petits de l'histogramme. En outre, du fait de l'erreur de mesure, le pic P est a priori symétrique et de largeur non nulle. Il peut par exemple être défini par une fonction gaussienne (ou courbe de Gauss). Pour procéder à l'identification du pic P, on détecte d'abord un point bas B et un sommet S du pic P sur une partie de la courbe enveloppe C de l'histogramme qui couvre les diamètres apparents les plus petits de l'histogramme.

Dans l'exemple de réalisation de la figure 6A, le sommet S du pic P correspond à une amplitude ou hauteur maximale de l'histogramme.

Sur la figure 6B, on a représenté un autre exemple d'histogramme obtenu à partir d'un échantillon de mesures de diamètres apparents réalisées sur un autre fil. Dans ce cas, le pic P est noyé dans l'histogramme. Il est donc plus difficile à détecter. En référence à la figure 6B, on voit que la pente montante de la courbe enveloppe C de l'histogramme, couvrant les diamètres les plus petits, contient un point d'inflexion, où la pente change, au-delà duquel (vers les diamètres plus grands) la pente croît moins fortement. Ce point d'inflexion correspond au sommet S du pic recherché P.

L'étape E4 d'identification du pic P comprend donc une première sous-étape de positionnement des points B et S sur la courbe enveloppe C. Cette étape est réalisée de façon automatique ici par le dispositif de traitement 5. Elle pourrait être réalisée manuellement par un utilisateur. Après avoir positionné sur la courbe enveloppe C de l'histogramme, le point bas B et le sommet S, le dispositif de traitement 5 détermine ensuite, parmi un ensemble de courbes prédéfinies en forme de pics symétriques (ici définies par des fonctions gaussiennes), la courbe C qui s'ajuste le mieux à la portion de courbe enveloppe C reliant le point bas B et le sommet S du pic P, lors d'une deuxième sous-étape de l'étape E4. La recherche de la courbe en forme de pic qui passe par les points B et S et correspond au mieux à la courbe enveloppe C est réalisée, de façon connue, à l'aide d'une fonction d'ajustement numérique (ou « *fit fonction* » en anglais), par régressions successives. Elle est réalisée par le dispositif de traitement 5.

Une exploitation des caractéristiques du pic P permet d'obtenir différentes caractéristiques relatives au fil de découpe analysé 100, notamment les caractéristiques morphologiques suivantes :

- le diamètre extérieur du fil $\varnothing_{ext}$ sans grain abrasif ;
- l'épaisseur I de la couche de matériau liant recouvrant l'âme du fil de découpe (dans le cas d'un fil 100 comportant une âme de diamètre $\varnothing_{âme}$ connu recouverte d'une couche de matériau liant 102) ;
- la densité $d_G$ de grains abrasifs à la surface du fil.

Les caractéristiques du fil énumérées ci-dessus sont obtenues par la mise en oeuvre des étapes E5 à E10, explicitées ci-après.

Lors de l'étape E5, le dispositif de traitement 5 détermine le diamètre extérieur $\varnothing_{ext}$ du fil 100 sans grain abrasif : il correspond au diamètre apparent $D_{pic}$ du pic, autrement dit le diamètre apparent autour duquel le pic P est centré.

Dans le cas d'un fil 100 comportant une âme métallique 101 de diamètre $\phi_{âme}$ connu (généralement fourni par le fabricant) recouverte d'une couche 102 de matériau liant, lors d'une étape de calcul E6, le dispositif de traitement 5 calcule l'épaisseur I de la couche 102 de matériau liant par la relation suivante :

$$l = \frac{(D_{pic} - \varnothing_{âme})}{2}.$$

Lors d'une étape de calcul E7, le dispositif de traitement 5 calcule une probabilité $p(2\overline{G})$ de ne détecter aucun grain abrasif sur le contour du fil lors d'une mesure par le capteur 2, en calculant le rapport entre l'aire de la surface du pic $A_{pic}$ et l'aire $A_{totale}$ de la surface totale délimitée par la courbe enveloppe :

$$p(2\overline{G}) = A_{pic}/A_{tot}.$$

Lors d'une étape de calcul E8, le dispositif de traitement 5 calcule une probabilité $p(G)$ de détecter un seul grain sur le contour du fil lors d'une mesure par le capteur 2. Cette probabilité $p(G)$ est calculée à partir de la probabilité $p(2\overline{G})$ par la relation

$$p(G) = 1 - \sqrt{p(2\overline{G})}.$$

Lors d'une étape de calcul suivante E9, le dispositif de traitement 5 calcule la densité $d_G$ de grains abrasifs à la surface du fil par la relation suivante :

$$d_G = \frac{p(G)}{A_{anal}}$$

où

- $p(G)$ est la probabilité de détecter un seul grain sur le contour du fil lors d'une mesure par le capteur 2 ;
- $A_{anal}$ est l'aire de la surface de fil analysée lors d'une mesure par le capteur 2.

L'aire $A_{anal}$ de la surface de fil analysée lors d'une mesure par le capteur 2 est calculée par la relation suivante :

$$A_{anal} = 2\theta_c(R_{âme} + l) \times w$$

où $R_{âme}$ représente le rayon de l'âme du fil, $l$ représente l'épaisseur de la couche de matériau liant, w représente la largeur du faisceau lumineux plan, et $\theta_c$ (précédemment explicité) représente l'angle critique correspondant à la position angulaire d'un grain abrasif 103 sur le contour du fil 100, au-delà de laquelle un grain abrasif 103 n'est pas détecté lors d'une mesure.

Lors d'une étape suivante E10, le dispositif de traitement 5 calcule le taux c de couverture des grains abrasifs sur le fil à l'aide de la relation $c = 100 \times d_G \times \pi \times r^2$ où r représente le rayon moyen des grains abrasifs.

Le dispositif de traitement 5 comprend différents modules de traitement destinés à mettre en oeuvre les étapes de traitement E3 à E10. Il comprend notamment :

- un module 50 de réalisation d'un histogramme de données à partir des valeurs de diamètres apparents acquises ;
- un module 51 d'identification d'un pic P dans l'histogramme, ledit pic P étant symétrique et centré autour d'une valeur de diamètre apparent $D_{pic}$ correspondant au diamètre du fil $Ø_{ext}$ sans grain abrasif ;
- un module 52 de calcul de l'épaisseur l de la couche 102 de matériau liant par la relation $l = \frac{(D_{pic} - Ø_{âme})}{2}$ ;
- un module 53 de détermination de la densité de grains abrasifs par la relation $d_G = \frac{1 - \sqrt{p(2\overline{G})}}{2\theta_c(R_{âme} + l) * w}$ , $p(2\overline{G})$ (probabilité de ne détecter aucun grain abrasif lors d'une mesure) étant déterminée au préalable par le module 53 en calculant le rapport entre la surface du pic et la surface totale délimitée par la courbe enveloppe, comme précédemment décrit ;
- un module 54 de calcul d'un taux *c* de couverture du fil par les grains abrasifs à l'aide de la relation $c = 100 \times d_G \times \pi \times r^2$.

Les modules 50, 51, 52, 53, 54 sont destinés à mettre en oeuvre respectivement les étapes E3 (module 50), E4 (module 51), E5-E6 (module 52), E7-E9 (module 53), E10 (module 54).

Dans une première variante de réalisation, le système de contrôle comprend une pluralité k d'ensembles comportant chacun un dispositif d'émission d'un faisceau lumineux plan et un capteur optique coopérant l'un avec l'autre, k étant strictement supérieur à 1. Un nombre k de faisceaux lumineux plans, analogues au faisceau FL précédemment décrit, sont émis. Ils ont des directions de propagation respectives $\vec{u_1}, \vec{u_2}, ..., \vec{u_k}$ qui sont décalées angulairement l'une par rapport à l'autre, par exemple d'un angle $\theta_k = \frac{2\pi}{k}$. Avantageusement, le nombre k est compris entre 2 et 10, préférentiellement entre 2 et 16.

Dans une deuxième variante de réalisation, une pluralité de fils parallèles sont analysés par un même faisceau lumineux plan. Les fils parallèles peuvent définir un plan qui est orthogonal à la direction de propagation $\vec{u}$ du faisceau. On peut ainsi envisager d'analyser simultanément plusieurs dizaines ou centaines de fils, formant par exemple une nappe filaire. Dans ce cas, la hauteur du faisceau lumineux est adaptée à la taille de la nappe filaire ou à l'étendue des fils voisins.

Le procédé de contrôle de l'invention peut être mis en oeuvre au sein d'un équipement de découpe filaire. Il permet dans ce cas de surveiller l'usure du fil en continu durant la découpe. Dans ce cas, le capteur optique peut être protégé des projections de liquide de coupe soit en le plaçant en dehors de la chambre de coupe, soit en l'encapsulant dans une enceinte de protection. La fréquence d'acquisition est dans ce cas asservie à la vitesse de défilement du fil dans le dispositif de coupe. L'acquisition de données de diamètre apparent du fil peut être réalisée de façon temporaire pour obtenir un échantillon de mesures représentatif. Avantageusement, les mesures sont réalisées lorsque le fil a une vitesse réduite, par exemple avant et/ou après un changement de sens du fil. L'invention concerne donc aussi un équipement de découpe filaire à l'aide du fil de découpe 100, intégrant le système de contrôle précédemment décrit. Le dispositif d'entraînement en déplacement du fil 100 à travers le faisceau lumineux FL comprend des éléments d'entraînement de l'équipement de découpe filaire.

Le procédé de contrôle peut également comprendre une étape de nettoyage du fil avant qu'il ne traverse le faisceau lumineux. Le nettoyage peut être réalisé par aspersion du fil à l'aide d'un fluide, d'un gaz ou d'un liquide, à forte pression. L'équipement de découpe intègre dans ce cas un dispositif de nettoyage du fil.

Le système de contrôle de fil de découpe de l'invention permet avantageusement d'utiliser des fréquences d'acquisition élevées, supérieures à la dizaine de kHz. De telles fréquences d'acquisition sont bien supérieures à celles des caméras usuelles. En outre, les mesures réalisées ne nécessitent pas d'équipement onéreux ou contraignant à utiliser, comme c'est le cas avec une caméra d'imagerie haute vitesse qui s'échauffe vite et ne permet qu'une fréquence d'acquisition limitée. D'autre part, avec l'invention, la quantité de données mesurées est limitée. En effet, dans le cas d'un capteur optique comportant par exemple une unique colonne de photo-détecteurs, le signal optique collecté par les photo-détecteurs dans la fenêtre d'analyse FA est converti est une seule valeur correspondant à un diamètre apparent de la portion de fil contenue dans la fenêtre. Le volume de données collectées est ainsi bien inférieur à celui obtenu par les méthodes de l'art antérieur basées sur l'acquisition d'images. Il en résulte que le système de contrôle de l'invention requiert des ressources informatiques moins importantes, notamment en termes de stockage et de traitement des données.

**Revendications**

1. Procédé de contrôle d'un fil de découpe (100) ayant une surface extérieure présentant des aspérités formées par des grains abrasifs (103), lesdits grains (103) ayant un diamètre moyen $D_g$ donné, comprenant les étapes suivantes :

   • émission (E0) d'un faisceau lumineux (FL) délimité par deux plans parallèles ;
   • entraînement (E1) en déplacement du fil (100) à travers le faisceau lumineux (FL), de façon linéaire, l'angle entre le fil (100) et les plans du faisceau (FL) étant compris entre 85° et 95°, notamment entre 88° et 92°, notamment encore égal à 90°;
   • et, à des instants d'acquisition successifs lors du déplacement du fil à travers le faisceau lumineux, acquisition (E2) d'un signal optique formé à partir du faisceau lumineux émis et partiellement interrompu par le fil, dans une fenêtre d'analyse du fil, et détermination, à partir du signal optique acquis, d'une valeur de diamètre apparent du fil,

   le procédé étant **caractérisé en ce que** la fenêtre d'analyse du fil a une largeur w comprise entre $D_g/2$ et $4 \times D_g$, et **en ce qu'**il comprend une étape (E3) de réalisation, à partir des valeurs de diamètres apparents acquises, d'un histogramme de données représentant une distribution des valeurs de diamètres apparents acquises, **en ce qu'**il comprend une étape (E4) d'identification d'un pic (P) dans l'histogramme, ledit pic (P) étant symétrique et centré autour d'une valeur de diamètre apparent ($D_{pic}$) correspondant au

diamètre du fil ($\varnothing_{ext}$) sans grain abrasif, **en ce qu'**il comprend une étape (E7-E8) de calcul d'une probabilité de ne détecter aucun grain abrasif lors d'une mesure dans la fenêtre d'analyse (FA), lors de laquelle on calcule le rapport entre la surface du pic ($A_{pic}$) et la surface totale ($A_{totale}$) délimitée par la courbe enveloppe de l'histogramme et **en ce qu'**on détermine la densité de grains abrasifs à partir de

$$d_G = \frac{1 - \sqrt{p(2\bar{G})}}{2\theta_c(R_{\hat{a}me} + l) * w}$$

l'équation où $p(2\bar{G})$ représente la probabilité de ne détecter aucun grain abrasif lors d'une mesure, $R_{\hat{a}me}$ représente le rayon de l'âme du fil, $l$ représente l'épaisseur de la couche de matériau liant, w représente la largeur de la fenêtre d'analyse (FA), et $\theta_c$ représente un angle critique correspondant à une position angulaire d'un grain abrasif à la surface extérieure du fil, au-delà de laquelle un grain abrasif n'est pas détecté lors d'une mesure.

2. Procédé selon la revendication précédente, **caractérisé en ce que**, la fenêtre d'analyse ayant une largeur donnée, on utilise une fréquence (f) d'acquisition du signal optique qui est inférieure ou égale à la vitesse (v) de déplacement du fil divisé par la largeur de la fenêtre d'analyse (FA).

3. Procédé selon l'une des revendications précédentes, **caractérisé en ce que**, à partir des valeurs de diamètres apparents acquises, on détermine au moins l'une des informations du groupe comportant une valeur moyenne de diamètre apparent sur au moins un tronçon du fil, un écart type du diamètre apparent sur au moins un tronçon du fil, une hauteur maximale de saillie des grains abrasifs et l'identification d'une zone dépourvue de grains abrasifs.

4. Procédé selon l'une des revendications précédentes, **caractérisé en ce que**, l'histogramme ayant une courbe enveloppe, lors de l'étape d'identification du pic, on détecte un point bas (B) et un sommet (S) du pic (P) sur une partie de la courbe enveloppe (C) de l'histogramme qui couvre les valeurs de diamètres apparents les plus faibles de l'histogramme et on détermine, parmi un ensemble de courbes prédéfinies en forme de pic symétrique, la courbe en forme de pic qui s'ajuste le mieux à la portion de courbe enveloppe reliant le point bas (B) et le sommet (S) du pic.

5. Procédé selon la revendication précédente, **caractérisé en ce que** les courbes prédéfinies en forme de pic symétrique sont définies par des fonctions gaussiennes.

6. Procédé selon l'une des revendications 4 et 5, **ca-**

ractérisé en ce que le sommet (S) du pic correspond à une amplitude maximale de l'histogramme ou à un point d'inflexion de la courbe enveloppe de l'histogramme.

7. Procédé selon l'une des revendications précédentes, **caractérisé en ce que**, le fil (100) comportant une âme (101), de diamètre donné, recouverte d'une couche (102) de matériau liant, il est prévu une étape (E6) de calcul de l'épaisseur l de la couche (102) de matériau liant à l'aide de l'équation $l = \frac{(D_{pic} - \varnothing_{âme})}{2}$, où $D_{pic}$ et $\varnothing_{âme}$ représentent respectivement le diamètre apparent du fil correspondant au sommet du pic et le diamètre de l'âme du fil.

8. Procédé selon l'une des revendications précédentes, **caractérisé en ce qu'**il comprend une étape (E9) de calcul d'un taux c de couverture du fil par les grains abrasifs à l'aide de la relation $c = 100 \times d_G \times \pi \times r^2$.

9. Procédé selon l'une des revendications précédentes, **caractérisé en ce qu'**il comprend l'émission d'un nombre k de faisceaux lumineux, k étant strictement supérieur à 1, les k faisceaux ayant des directions de propagation respectives qui sont décalées angulairement l'une par rapport à l'autre, par exemple d'un angle $\theta_k = \frac{2\pi}{k}$.

10. Procédé selon l'une des revendications précédentes, **caractérisé en ce qu'**il est mis en oeuvre au sein d'un dispositif de découpe filaire et **en ce qu'**il comprend une étape de nettoyage du fil avant qu'il ne traverse le faisceau lumineux.

11. Système de contrôle d'un fil de découpe (100) ayant une surface extérieure présentant des aspérités formées par des grains abrasifs (103), lesdits grains (103) ayant un diamètre moyen $D_g$ donné, comprenant :

    • un dispositif d'émission (1) d'un faisceau lumineux (FL) délimité par deux plans parallèles ;
    • un dispositif (3) d'entraînement en déplacement du fil (100) à travers le faisceau lumineux (FL), de façon linéaire, l'angle entre le fil (100) et les plans du faisceau (FL) étant compris entre 85° et 95°, notamment entre 88° et 92°, notamment encore égal à 90°;
    • un capteur optique (2) destiné à acquérir à un signal optique formé à partir du faisceau lumineux émis et partiellement interrompu par le fil, dans une fenêtre d'analyse (FA), à des instants d'acquisition successifs lors du déplacement du fil à travers le faisceau lumineux, et à déterminer, à partir du signal optique acquis, une valeur de diamètre apparent du fil,

le système étant **caractérisé en ce que** la fenêtre d'analyse (FA) a une largeur w comprise entre $D_g/2$ et $4 \times D_g$, et **en ce qu'**il comprend un dispositif (5) de traitement de données comportant un module (50) de réalisation d'un histogramme de données à partir des valeurs de diamètres apparents acquises, l'histogramme de données représentant une distribution des valeurs de diamètres apparents acquises, **en ce que** le dispositif de traitement (5) comporte un module (51) d'identification d'un pic (P) dans l'histogramme, ledit pic (P) étant symétrique et centré autour d'une valeur de diamètre apparent ($D_{pic}$) correspondant au diamètre du fil ($\varnothing_{ext}$) sans grain abrasif et **en ce que** le dispositif de traitement (5) comprend un module (53) de détermination de la densité de grains abrasifs à partir de l'équation

$$d_G = \frac{1 - \sqrt{p(2\overline{G})}}{2\theta_c (R_{âme} + l) * w}$$ où $p(2\overline{G})$ représente la probabilité de ne détecter aucun grain abrasif lors d'une mesure qui est calculée par le rapport entre la surface du pic ($A_{pic}$) et la surface totale ($A_{totale}$) délimitée par la courbe enveloppe de l'histogramme, $R_{âme}$ représente le rayon de l'âme du fil, $l$ représente l'épaisseur de la couche de matériau liant, w représente la largeur de la fenêtre d'analyse (FA), et $\theta_c$ représente un angle critique correspondant à une position angulaire d'un grain abrasif à la surface extérieure du fil, au-delà de laquelle un grain abrasif n'est pas détecté lors d'une mesure.

12. Système selon la revendication précédente, **caractérisé en ce que** le capteur optique comprend seulement une rangée de n photo-détecteurs ou trois rangées de photo-détecteurs RVB.

13. Système de contrôle selon la revendication 11 ou 12, **caractérisé en ce que**, le fil (100) comportant une âme (101), de diamètre donné, recouverte d'une couche (102) de matériau liant, le dispositif de traitement (5) comprend un module (52) de calcul de l'épaisseur $l$ de la couche (102) de matériau liant à l'aide de l'équation $l = \frac{(D_{pic} - \varnothing_{âme})}{2}$, où $D_{pic}$ et $\varnothing_{âme}$ représentent respectivement le diamètre apparent du fil correspondant au sommet du pic et le diamètre de l'âme du fil.

14. Système de contrôle selon l'une des revendications 11 à 13, **caractérisé en ce que** le dispositif de traitement (5) comprend un module (54) de calcul d'un taux *c* de couverture du fil par les grains abrasifs à l'aide de la relation $c = 100 \times d_G \times \pi \times r^2$.

15. Equipement de découpe filaire à l'aide d'un fil de découpe (100) ayant une surface extérieure présentant des aspérités formées par des grains abrasifs (103), lesdits grains (103) ayant un diamètre moyen $D_g$ donné, **caractérisé en ce qu'**il intègre le système de contrôle selon l'une des revendications 11 à 14 et **en ce que** le dispositif d'entraînement en déplacement du fil (100) à travers le faisceau lumineux (FL) comprend des éléments d'entraînement du système de découpe.

**Patentansprüche**

1. Verfahren zum Steuern eines Schneiddrahts (100), der eine äußere Oberfläche besitzt, die Rauheiten aufweist, die durch Schleifkörner (103) gebildet sind, wobei die Körner (103) einen gegebenen mittleren Durchmesser $D_g$ besitzen, das die folgenden Schritte umfasst:

• Aussenden (E0) eines Lichtstrahls (FL), der durch zwei parallele Ebenen begrenzt ist;
• verlagerndes Antreiben (E1) des Drahts (100) durch den Lichtstrahl (FL) auf geradlinige Weise, wobei der Winkel zwischen dem Draht (100) und den Ebenen des Strahls (FL) im Bereich von 85° und 95°, insbesondere von 88° bis 92° und noch spezieller bei 90° liegt; und
• zu aufeinander folgenden Erfassungszeitpunkten während der Verlagerung des Drahts durch den Lichtstrahl Erfassen (E2) eines optischen Signals, das aus dem ausgesendeten Lichtstrahl gebildet wird und durch den Draht teilweise unterbrochen wird, in einem Drahtanalysefenster und Bestimmen anhand des erfassten optischen Signals des sichtbaren Durchmessers des Drahts,

wobei das Verfahren **dadurch gekennzeichnet ist, dass** das Drahtanalysefenster eine Breite *w* im Bereich von $D_g/2$ bis $4 \times D_g$ besitzt und dass es einen Schritt (E3) umfasst, in dem anhand der erfassten Werte der sichtbaren Durchmesser ein Histogramm der Daten gebildet wird, das eine Verteilung der erfassten Werte der sichtbaren Durchmesser repräsentiert, dass es einen Schritt (E4) umfasst, in dem eine Spitze (P) in dem Histogramm identifiziert wird, wobei die Spitze (P) um einen Wert ($D_{pic}$) des sichtbaren Durchmessers, der dem Drahtdurchmesser ($\Phi_{ext}$) ohne Schleifkörner entspricht, symmetrisch und zentriert ist, dass es einen Schritt (E7-E8) umfasst, in dem eine Wahrscheinlichkeit berechnet wird, dass bei einer Messung in dem Analysefenster (FA) kein Schleifkorn detektiert wird, wobei das Verhältnis zwischen der Oberfläche der Spitze ($A_{pic}$) und der Gesamtoberfläche ($A_{totale}$), die durch die Hüllkurve des Histogramms begrenzt ist, berechnet wird, und dass die Dichte der Schleifkörner anhand der

$$d_G = \frac{1 - \sqrt{p\left(2\overline{G}\right)}}{2\theta_c\left(R_{\hat{a}me} + 1\right) * w}$$

Gleichung bestimmt wird, wobei $p(2\overline{G})$ die Wahrscheinlichkeit repräsentiert, dass in einer Messung kein Schleifkorn detektiert wird, $R_{\hat{a}me}$ den Radius der Seele des Drahts repräsentiert, *1* die Dicke der Bindemittelmaterialschicht repräsentiert, w die Breite des Analysefensters (FA) repräsentiert und $\theta_c$ einen kritischen Winkel repräsentiert, der einer Winkelposition eines Schleifkorns auf der äußeren Oberfläche des Drahts entspricht, jenseits derer kein Schleifkorn bei einer Messung detektiert wird.

2. Verfahren nach dem vorhergehenden Anspruch, **dadurch gekennzeichnet, dass** dann, wenn das Analysefenster eine gegebene Breite besitzt, eine Erfassungsfrequenz (*f*) des optischen Signals verwendet wird, die kleiner oder gleich der Geschwindigkeit (*v*) der Verlagerung des Drahts, dividiert durch die Breite des Analysefensters (FA), ist.

3. Verfahren nach einem der vorhergehenden Ansprüche, **dadurch gekennzeichnet, dass** anhand der erfassten Werte der sichtbaren Durchmesser wenigstens eine der Informationen aus der Gruppe bestimmt wird, die einen mittleren Wert des sichtbaren Durchmessers auf wenigstens einem Teilstück des Drahts, eine typische Abweichung des sichtbaren Durchmessers auf wenigstens einem Teilstück des Drahts, eine maximale Überstandshöhe der Schleifkörner und die Identifizierung einer Zone ohne Schleifkörner umfasst.

4. Verfahren nach einem der vorhergehenden Ansprüche, **dadurch gekennzeichnet, dass** dann, wenn das Histogramm eine Hüllkurve besitzt, im Schritt des Identifizierens der Spitze ein Fußpunkt (B) und ein Scheitel (S) der Spitze (P) auf jenem Teil der Hüllkurve (C) des Histogramms detektiert werden, der die kleinsten Werte der sichtbaren Durchmesser des Histogramms abdeckt und aus einer Gesamtheit von im Voraus definierten Kurven in Form einer symmetrischen Spitze die Kurve in Form einer Spitze bestimmt wird, die am besten an den Abschnitt der Hüllkurve angepasst ist, der den Fußpunkt (B) mit dem Scheitel (S) der Spitze verbindet.

5. Verfahren nach dem vorhergehenden Anspruch, **dadurch gekennzeichnet, dass** die im Voraus definierten Kurven in Form einer symmetrischen Spitze durch Gauß-Funktionen definiert sind.

**6.** Verfahren nach einem der Ansprüche 4 und 5, **dadurch gekennzeichnet, dass** der Scheitel (S) der Spitze einer maximalen Amplitude des Histogramms oder einem Wendepunkt der Hüllkurve des Histogramms entspricht.

**7.** Verfahren nach einem der vorhergehenden Ansprüche, **dadurch gekennzeichnet, dass** dann, wenn der Draht (100) eine Seele (101) enthält, die einen gegebenen Durchmesser besitzt und von einer Schicht (102) aus einem Bindemittelmaterial abgedeckt ist, ein Schritt (E6) vorgesehen ist, in dem die Dicke (*1*) der Schicht (102) aus einem Bindemittelmaterial mit Hilfe der Gleichung

$$ 1 = \frac{D_{pic} - \Phi_{\hat{a}me}}{2} $$

berechnet wird, wobei $D_{pic}$ und $\Phi_{\hat{a}me}$ den sichtbaren Durchmesser des Drahts, der dem Scheitel der Spitze entspricht, bzw. den Durchmesser der Seele des Drahts repräsentieren.

**8.** Verfahren nach einem der vorhergehenden Ansprüche, **dadurch gekennzeichnet, dass** es einen Schritt (E9) umfasst, in dem ein Anteil c der Abdeckung des Drahts durch die Schleifkörner mit Hilfe der Beziehung $c = 100 \times d_g \times \pi \times r^2$ berechnet wird.

**9.** Verfahren nach einem der vorhergehenden Ansprüche, **dadurch gekennzeichnet, dass** es das Aussenden einer Anzahl *k* von Lichtstrahlen umfasst, wobei *k* streng größer als 1 ist, wobei die *k* Strahlen jeweilige Ausbreitungsrichtungen haben, die in Winkelrichtung relativ zueinander beispielsweise um einen Winkel $\theta_k = \frac{2\pi}{k}$ versetzt sind.

**10.** Verfahren nach einem der vorhergehenden Ansprüche, **dadurch gekennzeichnet, dass** es in einer Drahtschneidevorrichtung ausgeführt wird und dass es einen Schritt umfasst, in dem der Draht gereinigt wird, bevor er den Lichtstrahl durchquert.

**11.** System zum Steuern eines Schneiddrahts (100), der eine äußere Oberfläche besitzt, die Rauheiten aufweist, die durch Schleifkörner (103) gebildet sind, wobei die Körner (103) einen gegebenen mittleren Durchmesser ($D_g$) besitzen, das Folgendes umfasst:

• eine Vorrichtung (1) zum Aussenden eines Lichtstrahls (FL), der durch zwei parallele Ebenen begrenzt ist;
• eine Vorrichtung (3) zum verlagernden Antreiben des Drahts (100) durch den Lichtstrahl (FL) auf geradlinige Weise, wobei der Winkel zwischen dem Draht (100) und den Ebenen des Strahls (FL) im Bereich von 85° bis 95°, insbesondere von 88° bis 92° und spezieller bei 90° liegt;
• einen optischen Sensor (2), der dazu bestimmt ist, ein optisches Signal, das aus dem ausgesendeten Lichtstrahl gebildet ist und durch den Draht teilweise unterbrochen wird, in einem Analysefenster (FA) zu aufeinander folgenden Erfassungszeitpunkten während der Verlagerung des Drahts durch den Lichtstrahl zu erfassen und anhand des erfassten optischen Signals einen Wert des sichtbaren Durchmessers des Drahts zu bestimmen,

wobei das System **dadurch gekennzeichnet ist, dass** das Drahtanalysefenster eine Breite *w* im Bereich von $D_g/2$ bis $4 \times D_g$ besitzt und dass es einen Schritt (E3) umfasst, in dem anhand der erfassten Werte der sichtbaren Durchmesser ein Histogramm der Daten gebildet wird, das eine Verteilung der erfassten Werte der sichtbaren Durchmesser repräsentiert, dass es einen Schritt (E4) umfasst, in dem eine Spitze (P) in dem Histogramm identifiziert wird, wobei die Spitze (P) um einen Wert ($D_{pic}$) des sichtbaren Durchmessers, der dem Drahtdurchmesser ($\Phi_{ext}$) ohne Schleifkörner entspricht, symmetrisch und zentriert ist, dass es einen Schritt (E7-E8) umfasst, in dem eine Wahrscheinlichkeit berechnet wird, dass bei einer Messung in dem Analysefenster (FA) kein Schleifkorn detektiert wird, wobei das Verhältnis zwischen der Oberfläche der Spitze ($A_{pic}$) und der Gesamtoberfläche ($A_{totale}$), die durch die Hüllkurve des Histogramms begrenzt ist, berechnet wird, und dass die Dichte der Schleifkörner anhand der

$$ d_G = \frac{1 - \sqrt{p\left(2\overline{G}\right)}}{2\theta_c \left(R_{\hat{a}me} + 1\right) * w} $$

Gleichung bestimmt wird, wobei $p(2\overline{G})$ die Wahrscheinlichkeit repräsentiert, dass in einer Messung kein Schleifkorn detektiert wird, $R_{\hat{a}me}$ den Radius der Seele des Drahts repräsentiert, *1* die Dicke der Bindemittelmaterialschicht repräsentiert, w die Breite des Analysefensters (FA) repräsentiert und $\theta_c$ einen kritischen Winkel repräsentiert, der einer Winkelposition eines Schleifkorns auf der äußeren Oberfläche des Drahts entspricht, jenseits derer kein Schleifkorn bei einer Messung detektiert wird.

**12.** System nach dem vorhergehenden Anspruch, **dadurch gekennzeichnet, dass** der optische Sensor nur eine Reihe von *n* Photodetektoren oder drei Reihen von Photodetektoren RVB umfasst.

**13.** Steuersystem nach Anspruch 11 oder 12, **dadurch**

**gekennzeichnet, dass** dann, wenn der Draht (100) eine Seele (101) aufweist, die einen gegebenen Durchmesser besitzt und mit einer Schicht (102) aus einem Bindemittelmaterial beschichtet ist, die Verarbeitungsvorrichtung (5) ein Modul (52) umfasst, in dem die Dicke (*1*) der Schicht (102) aus einem Bindemittelmaterial mit Hilfe der Gleichung

$$ l = \frac{D_{pic} - \Phi_{\hat{a}me}}{2} $$

berechnet wird, wobei $D_{pic}$ und $\Phi_{\hat{a}me}$ den sichtbaren Durchmesser des Drahts, der dem Scheitel der Spitze entspricht, bzw. den Durchmesser der Seele des Drahts repräsentieren.

14. Steuersystem nach einem der Ansprüche 11 bis 13, **dadurch gekennzeichnet, dass** die Verarbeitungsvorrichtung (5) ein Modul (54) umfasst, in dem ein Anteil *c* der Abdeckung des Drahts durch die Schleifkörner mit Hilfe der Beziehung $c = 100 \times d_g \times \pi \times r^2$ berechnet wird.

15. Anlage zum Drahtschneiden mit Hilfe eines Schneiddrahts (100), der eine äußere Oberfläche besitzt, die Rauheiten aufweist, die durch Schleifkörner (103) gebildet sind, wobei die Körner (103) einen gegebenen mittleren Durchmesser ($D_g$) besitzen, **dadurch gekennzeichnet, dass** sie das Steuersystem nach einem der Ansprüche 11 bis 14 enthält und dass die Vorrichtung zum verlagernden Antreiben des Drahts (100) durch den Lichtstrahl (FL) Antriebselemente des Schneidsystems umfasst.

**Claims**

1. Method for monitoring a cutting wire (100) having an exterior surface presenting asperities formed by abrasive grains (103), said grains (103) having a given average diameter $D_g$, comprising the following steps:

   • emitting (E0) a light beam (FL) bounded by two parallel planes;
   • driving (E1) the wire (100) to move through the light beam (FL) linearly, the angle between the wire (100) and the planes of the beam (FL) being comprised between 85° and 95°, particularly between 88° and 92°, and even more particularly equal to 90°;
   • and, at successive acquisition times during the movement of the wire through the light beam, acquiring (E2) an optical signal formed from the emitted light beam partially interrupted by the wire, in a wire analysis window, and determining, from the acquired optical signal, a value of an apparent diameter of the wire,

the method being **characterized in that** the wire analysis window has a width w comprised between $D_g/2$ and $4 \times D_g$, and **in that** it comprises a step (E3) of producing, from the acquired apparent diameter values, a data histogram representing a distribution of the acquired apparent diameter values, **in that** it comprises a step (E4) of identifying a peak (P) in the histogram, said peak (P) being symmetric and centred on an apparent diameter value ($D_{pic}$) corresponding to the diameter of the wire ($\varnothing_{ext}$) without abrasive grains, **in that** it comprises a step (E7-E8) of calculating a probability of detecting no abrasive grain during a measurement in the analysis window (FA), in which step the ratio between the area of the peak ($A_{pic}$) and the total area ($A_{totale}$) bounded by the envelope curve of the histogram is calculated, and **in that** the density of abrasive grains is determined using the equation

$$ d_G = \frac{1 - \sqrt{p(2\overline{G})}}{2\theta_c (R_{\hat{a}me}+l)*w} $$

where $p(2\overline{G})$ is the probability of detecting no abrasive grain during a measurement, $R_{\hat{a}me}$ is the radius of the core of the wire, $l$ is the thickness of the layer of binding material, w is the width of the analysis window (FA), and $\theta_c$ is a critical angle corresponding to an angular position of an abrasive grain on the exterior surface of the wire, beyond which an abrasive grain is not detected during a measurement.

2. Method according to the preceding claim, **characterized in that**, the analysis window having a given width, a frequency (f) of acquisition of the optical signal is used that is lower than or equal to the speed (v) of movement of the wire divided by the width of the analysis window (FA).

3. Method according to one of the preceding claims, **characterized in that**, from the acquired apparent diameter values, at least one of the following pieces of information on the group is determined: an average apparent diameter value over at least one segment of the wire, a standard deviation in the apparent diameter over at least one segment of the wire, a maximum height of protrusion of the abrasive grains and the identification of a zone devoid of abrasive grains.

4. Method according to one of the preceding claims, **characterized in that**, the histogram having an envelope curve, in the step of identifying the peak, a low point (B) and an apex (S) of the peak (P) are detected in a portion of the envelope curve (C) of the histogram that covers the lowest apparent diameter values of the histogram and the peak-shaped curve that best fits the section of envelope curve connecting the low point (B) and the apex (S) of the peak is determined from among a set of predefined curves of symmetric peak shape.

5. Method according to the preceding claim, **characterized in that** the predefined curves of symmetric peak shape are defined by Gaussian functions.

6. Method according to one of Claims 4 and 5, **characterized in that** the apex (S) of the peak corresponds to a maximum amplitude of the histogram or to an inflection point of the envelope curve of the histogram.

7. Method according to one of the preceding claims, **characterized in that**, the wire (100) comprising a core (101), of given diameter, covered by a layer (102) of binding material, provision is made for a step (E6) of calculating the thickness $l$ of the layer (102) of binding material using the equation $l = \frac{D_{pic} - \varnothing_{\hat{a}me}}{2}$, where $D_{pic}$ and $\varnothing_{\hat{a}me}$ are the apparent diameter of the wire corresponding to the apex of the peak and the diameter of the core of the wire, respectively.

8. Method according to one of the preceding claims, **characterized in that** it comprises a step (E9) of calculating a degree $c$ of coverage of the wire by the abrasive grains using the relationship $c = 100 \times d_G \times \pi \times r^2$.

9. Method according to one of the preceding claims, **characterized in that** it comprises emitting a number k of light beams, k being strictly higher than 1, the k beams having respective propagation directions that are angularly offset with respect to each other, for example by an angle $\theta_k = \frac{2\pi}{k}$.

10. Method according to one of the preceding claims, **characterized in that** it is implemented within a wire cutting device and **in that** it comprises a step of cleaning the wire before it passes through the light beam.

11. System for monitoring a cutting wire (100) having an exterior surface presenting asperities formed by abrasive grains (103), said grains (103) having a given average diameter $D_g$, comprising:

• a device (1) for emitting a light beam (FL) bounded by two parallel planes;
• a device (3) for driving the wire (100) to move through the light beam (FL) linearly, the angle between the wire (100) and the planes of the beam (FL) being comprised between 85° and 95°, particularly between 88° and 92°, and even more particularly equal to 90°;
• an optical sensor (2) intended to acquire an optical signal formed from the emitted light beam partially interrupted by the wire, in an analysis window (FA), at successive acquisition times during the movement of the wire through the light beam, and to determine, from the acquired optical signal, a value of an apparent diameter of the wire,

the system being **characterized in that** the analysis window (FA) has a width w comprised between $D_g/2$ and $4 \times D_g$, and **in that** it comprises a data-processing device (5) comprising a module (50) for producing a data histogram from acquired apparent diameter values, the data histogram representing a distribution of the acquired apparent diameter values, **in that** the processing device (5) comprises a module (51) for identifying a peak (P) in the histogram, said peak (P) being symmetric and centred on an apparent diameter value ($D_{pic}$) corresponding to the diameter of the wire ($\varnothing_{ext}$) without abrasive grains, and **in that** the processing device (5) comprises a module (53) for determining the density of abrasive grains using the equation $d_G = \frac{1 - \sqrt{p(2\bar{G})}}{2\theta_c(R_{\hat{a}me} + l) * w}$ where $p(2\bar{G})$ is the probability of detecting no abrasive grain during a measurement, which is calculated using the ratio between the area of the peak ($A_{pic}$) and the total area ($A_{totale}$) bounded by the envelope curve of the histogram, $R_{\hat{a}me}$ is the radius of the core of the wire, $l$ is the thickness of the layer of binding material, $w$ is the width of the analysis window (FA), and $\theta_c$ is a critical angle corresponding to an angular position of an abrasive grain on the exterior surface of the wire, beyond which an abrasive grain is not detected during a measurement.

12. System according to the preceding claim, **characterized in that** the optical sensor comprises only one row of n photodetectors or three rows of RGB photodetectors.

13. Monitoring system according to Claim 11 or 12, **characterized in that**, the wire (100) comprising a core (101) of given diameter covered by a layer (102) of binding material, the processing device (5) comprises a module (52) for calculating the thickness $l$ of the layer (102) of binding material using the equation $l = \frac{D_{pic} - \varnothing_{\hat{a}me}}{2}$, where $D_{pic}$ and $\varnothing_{\hat{a}me}$ are the apparent diameter of the wire corresponding to the apex of the peak and the diameter of the core of the wire, respectively.

**14.** Monitoring system according to one of Claims 11 to 13, **characterized in that** the processing device (5) comprises a module (54) for calculating a degree $c$ of coverage of the wire by the abrasive grains using the relationship $c = 100 \times d_G \times \pi \times r^2$.

**15.** Item of wire-cutting equipment using a cutting wire (100) having an exterior surface presenting asperities formed by abrasive grains (103), said grains (103) having a given average diameter $D_g$, **characterized in that** it incorporates the monitoring system according to one of Claims 11 to 14 and **in that** the device for driving the wire (100) to move through the light beam (FL) comprises driving elements of the cutting system.

**Fig.1A**

**Fig.1B**

**Fig.1C**

**Fig.1D**

**Fig.2**

**Fig.3**

FEUILLE DE REMPLACEMENT (RÈGLE 26)

**Fig. 4A**  **Fig. 4B**  **Fig. 4C**

**Fig. 5**

**Fig. 6A**

**Fig. 6B**

E0 — EM FL

E1 — DFL_FIL

E2 — ACQ $D_{ap}$

E3 — HIST

E4 — ID P

E5 — $D_{pic} = \varnothing_{ext}$

E6 — $l = \dfrac{\left(D_{pic} - \varnothing_{\text{âme}}\right)}{2}$

E7 — $p(2\overline{G}) = A_{pic}/A_{tot}$

E8 — $p(G) = 1 - \sqrt{p(2\overline{G})}$

E9 — $d_G = \dfrac{p(G)}{A_{anal}}$ ; $A_{anal} = 2\theta_c(R_{\text{âme}} + l) * w$

E10 — $c = 100 * d_G * \pi * r^2$

**Fig. 7**

**Fig. 8**

**Fig. 9A**

**Fig. 9B**

## RÉFÉRENCES CITÉES DANS LA DESCRIPTION

**Documents brevets cités dans la description**

- EP 2586582 A
- JP 2005037221 A
- CN 203965287 U